# EUROPEAN PATENT SPECIFICATION

(11) **EP 1 132 249 B1**
(45) Date of publication and mention of the grant of the patent: **16.11.2005**
(21) Application number: 01105896.3
(22) Date of filing: 09.03.2001
(51) Int. Cl.: B60K 17/02

(54) **Vehicle for traveling on uneven ground**
Geländefahrzeug
Véhicule tout-terrain

(30) Priority: 09.03.2000 JP 2000065371
(43) Date of publication of application: 12.09.2001
(73) Proprietor: HONDA GIKEN KOGYO KABUSHIKI KAISHA, Minato-ku, Tokyo (JP)
(72) Inventor: Inagaki, Takashi, Wako-shi, Saitama (JP); Shimada, Toshio, Wako-shi, Saitama (JP); Hori, Yoshiaki, Wako-shi, Saitama (JP); Shichinohe, Takashi, Wako-shi, Saitama (JP)
(74) Representative: Liska, Horst

(56) References cited:
- EP-A- 1 001 187
- US-A- 5 636 608
- US-A1- 2001 020 402
- PATENT ABSTRACTS OF JAPAN vol. 2000, no. 10, 17 November 2000 (2000-11-17) & JP 2000 205372 A (YUTAKA GIKEN CO LTD), 25 July 2000 (2000-07-25)
- PATENT ABSTRACTS OF JAPAN vol. 007, no. 269 (M-259), 30 November 1983 (1983-11-30) & JP 58 146756 A (HONDA GIKEN KOGYO KK), 1 September 1983 (1983-09-01)

## Description

The present invention relates to a vehicle for traveling on uneven ground, such as a saddle riding type four-wheel (three-wheel) buggy or the like.

Ground contact pressure (load per tire / ground contact area) (ka/cm²) is an important factor in traveling on a road surface having a small friction coefficient (µ), such as a muddy, marshy, sandy, snowy, or graveled road surface.

That is, the ground contact pressure of a general passenger car is 1.8-2.3 kg/cm² so that traveling on a soft road having a small friction coefficient (µ) in such a passenger car results in significant tire sinking as well as road surface grip deterioration in a road with small protrusions such as a graveled road, which degrades traveling performance.

Therefore, a vehicle fitted with a low-pressure balloon tires, having small ground contact pressure, has been suggested for traveling on uneven ground as described above. The ground contact pressure of the aforementioned low-pressure balloon tire is approx. 1/5th that of the passenger car - i.e. no more than 0.50 kg/cm².

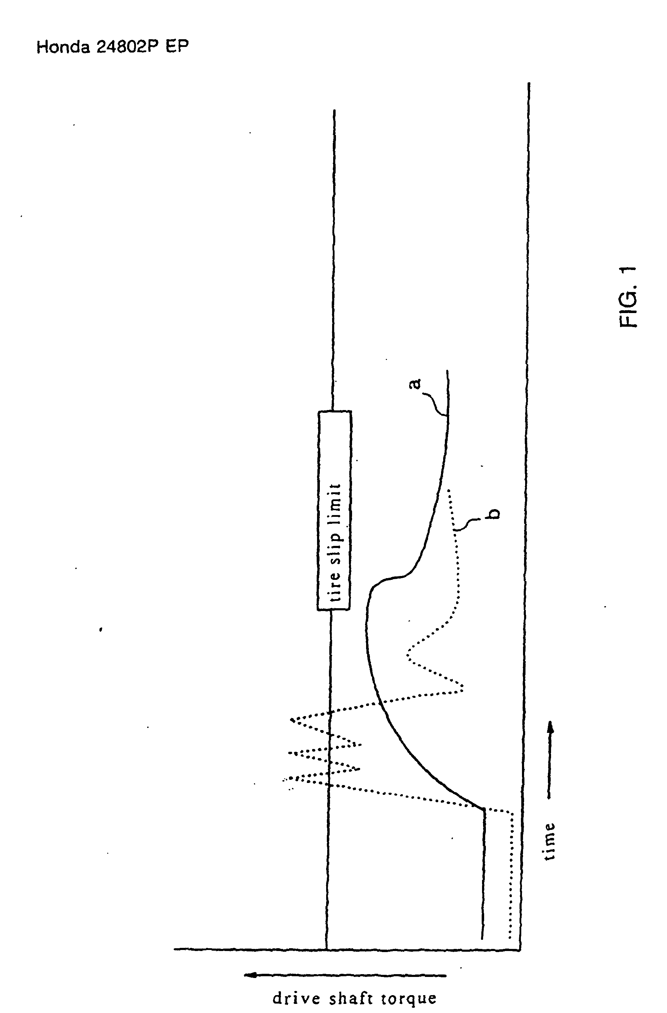

Fig. 1 is a graph showing the relationship between torque transmission time (abscissas axis) and torque transmitted to a drive shaft (ordinate axis), of a vehicle for traveling on uneven ground fitted with the low-pressure balloon tires. In Fig. 1, a dotted line (b) shows the relationship for a conventional vehicle for traveling on uneven ground, equipped with a manual transmission (MT).

From this graph, when switched from a neutral to a low position, the manual transmission (MT) leads to such a significant torque variation that the torque often exceeds a slip limit of the tire, even though the vehicle is fitted with low-pressure balloon tires having small ground contact pressure.

US-A-5 636 608 discloses a vehicle in accordance with the preamble of claim 1. There, no torque converter is provided.

To solve the aforementioned problems, the present invention provides a vehicle in accordance with claim 1. Therein a torque converter in a power transmission path extends from a crank shaft of an engine to an input shaft of a multistage transmission in the vehicle for traveling on uneven ground, fitted with the low-pressure balloon tires. As the low-pressure balloon tires, the ground contact pressure is assumed to be no more than 0,50 kg/cm². The torque converter allows a smooth torque transmission. By overlapping the torque converter and the clutch when viewed in the longitudinal direction of the vehicle body, an effective us of space is ensured.

The transmission torque (T) via the torque converter is expressed as T = τ • (N/1000)² where (τ) is the torque capacity and (N) is the engine rotation speed. The transmission torque (T) varies smoothly with the varying torque capacity (τ) and rotation speed (N) so that it is difficult for the torque transmitted to the drive shaft to exceed the slip limit of the tire as shown by a solid line (a) in Fig. 1.

Although the torque converter has a slip function, it performs slight torque transmission when power is input thereto from the engine. As a result, a creep phenomenon occurs, that is, the power is transmitted slightly to driving wheels even when the engine is in an idling state at the start when the multistage transmission is switched from a neutral to a low position. Also, the switching resistance of the multistage transmission is large because friction caused by the transmission torque acts continuously on a switching portion of the multistage transmission.

However, the clutch provided in series with the torque converter is turned off to interrupt the power transmission to a downstream side of the clutch, irrespective of the presence of the torque converter, so that the creep phenomenon can be prevented even with the transmission in the low position during engine idling. Also, during the transmission operation, the clutch is first turned off to bring the transmission into a no-load state irrespective of the presence of the torque converter, so that the transmission can be lightly performed without an accompanying torque shock.

As explained above, according to the invention described in claim 1, during traveling on uneven ground, such as a muddy, marshy, sandy, snowy, or graveled road, slippage can be controlled by the torque converter provided in the power transmission path extending from the crank shaft, of the vehicle for traveling on uneven ground fitted with low-pressure balloon tires, to the input shaft of the multistage transmission, so that the traveling performance is improved while the possibility of breaking up a road surface or of damaging crops, etc. is reduced.

That is, in a conventional vehicle for traveling on uneven ground, the transmission torque depends on only a pressing force, and varies so significantly on account of the manual transmission (MT) that the torque transmitted to the propeller shaft exceeds the tire slip limit during traveling on a low friction coefficient (µ) road, as shown by the dotted line (b) in Fig. 1.

However, by providing the torque converter in the power transmission path, the torque (T) transmitted to the propeller shaft, expressed as T = τ • (N/1000)², varies smoothly with the varying torque capacity (τ) and rotation speed (N). Accordingly, it is difficult for the torque transmitted to the propeller shaft to exceed the tire slip limit as shown by the solid line (a) in Fig. 1.

This invention is effective in a small ground contact pressure tire, that is, a tire that is less prone to sinking on a soft road and capable of tracking small irregularities of, for example, sand or gravel, particularly a low-pressure balloon tire having no more than 0.50 kg/cm² concrete ground contact pressure.

According to the invention, in the power transmission path, besides the torque converter the clutch is provided to be in series therewith, so that the power being slightly transmitted from the engine to the propeller shaft, the so-called creep phenomenon, can be avoided in the neutral position.

Moreover, while in the prior art the switching resistance of the transmission is large because friction caused by the transmission torque acts continuously on a switching portion of the transmission, the clutch is provided to bring the transmission into a no-load state irrespective of the presence of the torque converter, so that the transmission can be lightly performed without accompanying torque shock.

An embodiment of this invention will hereinafter be explained by reference to the accompanying drawings in which:
Fig. 1 is a graph comparing transmission torque in a torque converter vehicle and a manual vehicle in a low friction coefficient road during start.

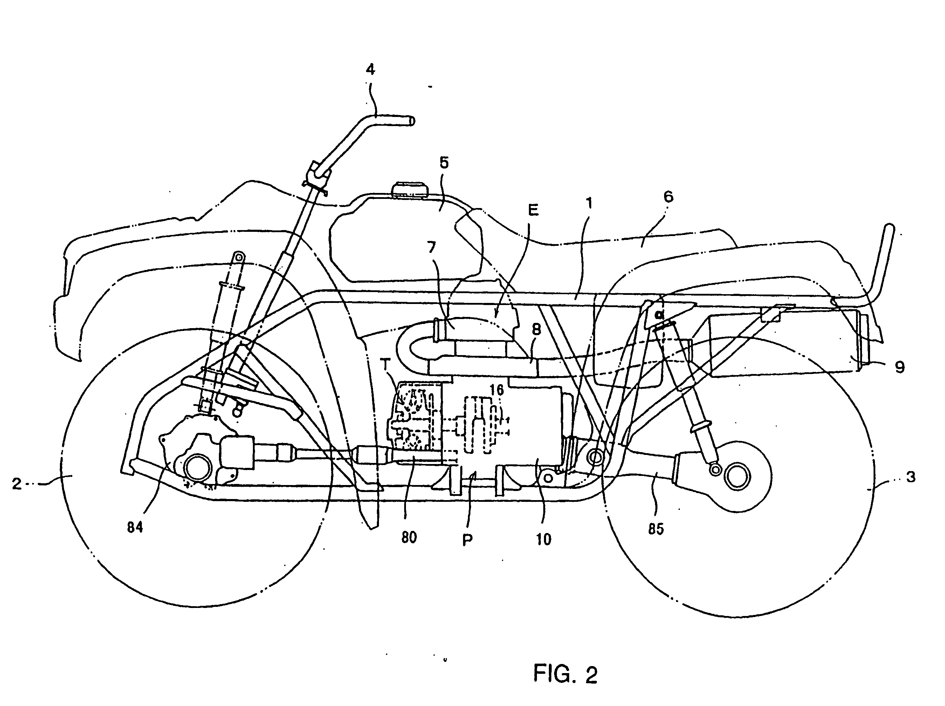

Fig. 2 is an overall side view of a vehicle for traveling on uneven ground, to which the present invention relates;

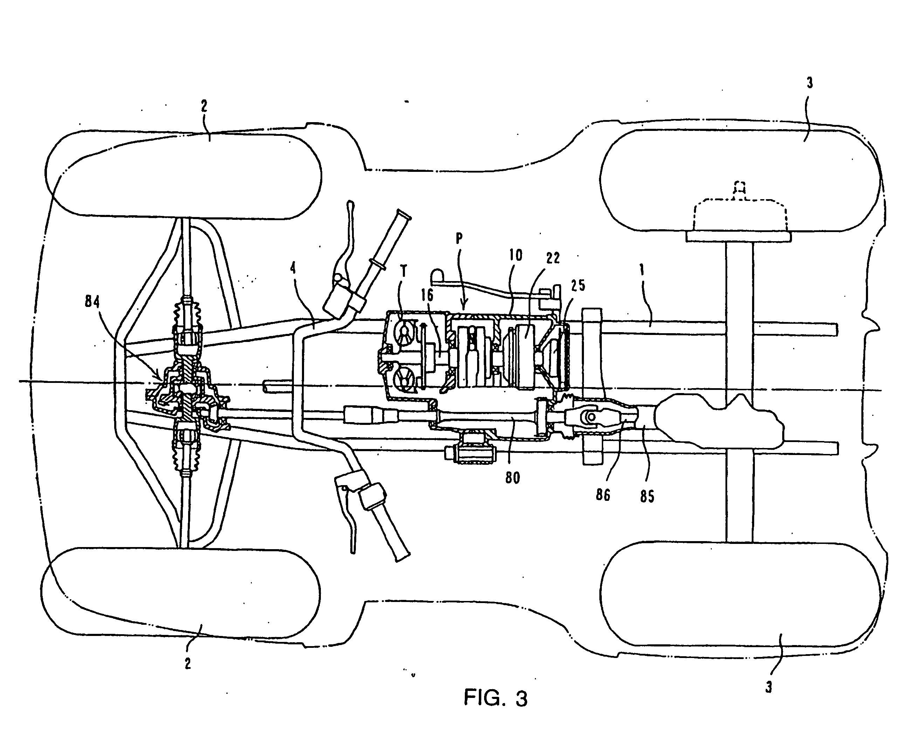

Fig. 3 is an overall top plan view of the same vehicle for traveling on uneven ground;
Fig. 4 is a cross-sectional view of a power unit mounted in the same vehicle for traveling on uneven ground;
Fig. 5 is an enlarged view of essential portions, centered on the torque converter of Fig. 3;
Fig. 6 is an enlarged view of essential portions, centered on the multistage transmission mechanism of Fig. 3;
Fig. 7 is an oil pressure control circuit diagram for the power unit shown in Fig. 4, 5, and 6. and
Fig. 8 is a cross-sectional view illustrating another embodiment of the power unit.

The illustrated vehicle for traveling on uneven ground is a saddle riding type four-wheel buggy. The saddle riding type four-wheel buggy has a pair of left and right front wheels 2 for driving and steering suspended in a front portion of a body frame 1 made of a welded pipe, and a pair of left and right rear driving wheels 3 suspended in a rear portion thereof. The ground contact pressure of the front and rear wheels 2, 3 is no more than 0.50 kg/cm², and in this embodiment low-pressure balloon tires having ground contact pressure of no more than 0.25 kg/cm² are used.

A handle 4 for steering the front wheels 2 is provided on a front end of the body frame 1, while a fuel tank 5 is disposed in an intermediate portion between the front and the rear thereof. A straddle type seat 6 is disposed in an upper portion of the body frame 1 at the rear relative to the fuel tank 5. A power unit P including an engine E, a torque converter T and a transmission mechanism M is fitted below the fuel tank 5 and the seat 6.

One end of an exhaust pipe 8 is connected to a front exhaust port of a cylinder head 13 in an upper portion of a cylinder block 7 in the engine E, while the other end of the exhaust pipe 8 is connected through a side of the power unit P to a muffler 9 provided at the rear of the body.

Next, a structure of the power unit P will be described.
First, a cylinder block 7 is vertically provided in a crank case 10 of the engine E and a piston 12 is slidably fitted inside the cylinder block 7 via a sleeve 11, while an air cleaner (not shown) and a carburetor 14 are connected to a cylinder head 13 in an upper portion of the cylinder block 7.

A crank shaft 16 is rotatably mounted in the crank case 10 via ball bearings 17, 17, and is coupled to the piston 12 by a connecting rod 18.

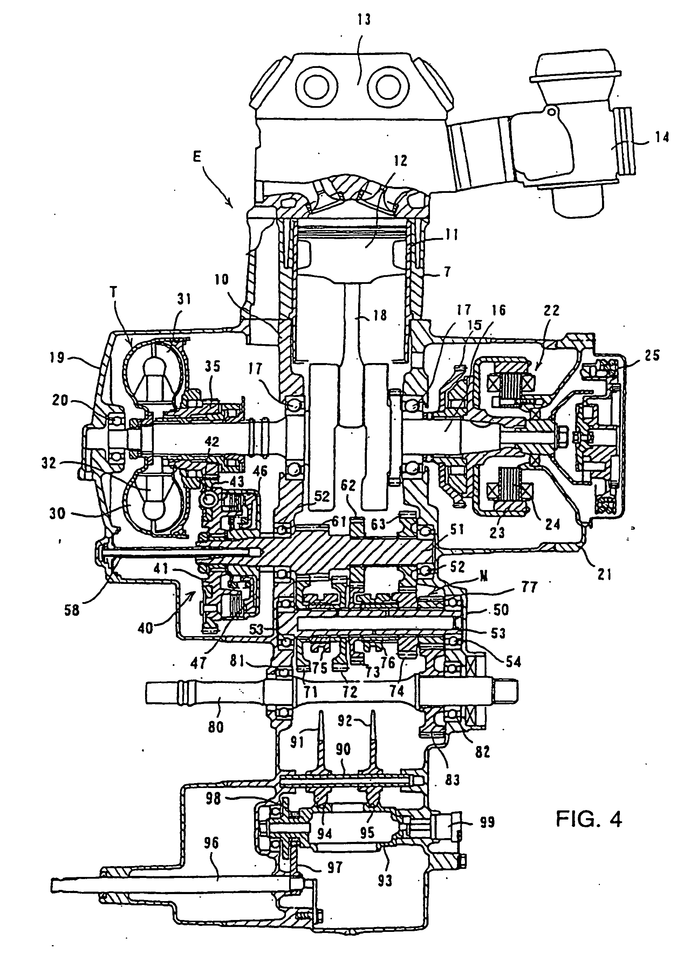

The crank shaft 16 is disposed in the longitudinal direction of the body so that a portion of the crank shaft 16 protruding forwardly (to the left in Fig. 4) from the crank case 10 is enclosed in an engine front cover 19 while its fore-end portion is rotatably mounted via a ball bearing 20, and a portion protruding backwardly (to the right in Fig. 4) from the crank case 10 is enclosed in an engine rear cover 21.

A rotor 23 of an electric generator 22 is fitted to the crank shaft 16 facing into the engine rear cover 21, and a stator 24 disposed at an inner side of the rotor 23 is secured to the engine rear cover 21. Also, a recoil starter 25 with a knob protruding in a rear portion of the power unit P is fitted to the rear end of the crank shaft 16 to sandwich the electric generator 22 therebetween, and a start gear 15 that engages a starting motor is disposed between the electric generator 22 and the crank case 10.

The torque converter T is also disposed in the front cover 19. The torque converter T comprises a pump impeller 30, a turbine runner 31 and a stator impeller 32, and is filled with oil so as to transmit power.
This embodiment also has a temperature reducing effect on the torque converter T due to traveling wind sweeping across the engine E on a side thereof since the crank shaft 16 is disposed in the same longitudinal direction as that of the body, while the torque converter T is provided at the front end of the crank shaft 16.

The pump impeller 30 rotates integrally with the crank shaft 16. The turbine runner 31 is disposed opposite the pump impeller 30 and is secured to a turbine shaft 34 arranged rotatably and coaxially relative to the crank shaft 16. The turbine shaft 34 is coupled to the pump impeller 30 by a one-way clutch 33. Also, the rotation of the pump impeller 30 is transmitted through the filling oil in the torque converter T to the turbine runner 31, while power is transmitted through a primary gear 35 and a clutch 40 to the transmission mechanism M.

A stator shaft 36 of the stator impeller 32 is rotatable about a support member 38 fixed to the crank case 10 by means of a one-way clutch 37. A significant rotation difference between the pump impeller 30 and the turbine runner 31 causes no rotation of the stator impeller 32, so that a smooth flow of the oil from the turbine runner 31 permits torque amplification of torque reaction to the stator impeller 32. On the other hand, a small rotation difference between the pump impeller 30 and the turbine runner 31 allows the stator impeller 32 to idle so as to cause little resistance.

The transmission mechanism M is held in a transmission case 50 formed integrally with the crank case 10. An input shaft 51 parallel to the crank shaft 16 is rotatably mounted to the transmission case 50 via a ball bearing 52, and likewise an output shaft 53 parallel to the crank shaft 16 is rotatably mounted to the transmission case 50 via a ball bearing 54.

Also, a clutch 40 is provided at one end of the input shaft 51 (at the front of the body). Effective use of space is ensured by arranging the clutch 40 between the torque converter T and the crank case 10 so that part of it overlaps the torque converter T when viewed in the longitudinal direction of the body.

The clutch 40 includes a clutch center 41 being rotatable on the input shaft 51, a driven gear 43 being coupled to the clutch center 41 by a dampener spring 42 while being meshed with a driving gear 35 of the torque converter T, a plurality of first clutch plates 44 relatively unrotatably engaging the outer periphery of the clutch center 41, a plurality of second clutch plates 45 being superimposed and arranged between the first clutch plates 44, a clutch outer 46 containing the first and second clutch plates 44, 45 and rotating integrally with the input shaft 51 by relatively unrotatably engaging the outer periphery of the second clutch plates 45, and a hydraulic piston 47 being slidably fitted in the clutch outer 46.

An oil chamber 48 is formed between the hydraulic piston 47 and the inside of the clutch outer 46, while a spring 49 is arranged on the opposite side of the oil chamber 48 for the hydraulic piston 47 to energize the hydraulic piston 47 in such a direction as to reduce the size of the oil chamber 48.

The input shaft 51 is also axially formed with an oil path 56 communicating with the oil chamber 48 through an oil path 57 and being supplied with the oil through a pipe 58 extending to the engine front cover 19.

After the oil is thus fed through the pipe 58 and the oil paths 56, 57 into the oil chamber 48, the hydraulic piston 47 moves against the spring 49, presses the first and second clutch plates 44, 45 against each other, and turns on the clutch 40, thereby transmitting the power from the torque converter T to the input shaft 51.
Conversely, by removing the oil from the oil chamber 48, the piston 47 moves in the opposite direction, separates the first and second clutch plates 44, 45 from each other, and turns off the clutch 40.

Here, in this embodiment, the clutch 40 is turned on or off on the basis of a signal from an idling sensor and a transmission operation sensor. That is, during the engine idling and during the transmission operation, the clutch 40 is turned off so as not to transmit the power from the torque converter T to the input shaft 51.
Accordingly, no creep phenomenon can occur during idling, and the resistance can be small during the transmission operation.

The input shaft 51 is provided with driving gears 61, 62, 63 integral therewith or separate therefrom but which can rotate integrally the input shaft. Also, the output shaft 53 is rotatably provided with driven gears 71, 72, 73, 74. The driving gear 61 is meshed with the driven gear 71, so that they constitute a first speed gear train, the driving gear 62 is meshed with the driven gear 73, so that they constitute a second speed gear train, and the driving gear 63 is meshed with the driven gear 74, so that they constitute a third speed gear train. Further, by means of an intermediate gear provided for an intermediate shaft, not shown, existing between the input and output shafts 51, 53, the driving gear 61 is meshed with the driven gear 72 so that they constitute a reverse gear train.

Further, by means of splines, the output shaft 53 is engaged with dog clutches 75, 76 rotatable integrally therewith and axially movable. By means of shift forks 91, 92 that will be described later, the dog clutches 75, 76 are selectively engaged with any one of the driven gears 71, 73, 74, or 72, so that the first, the second, the third speed gear train, or the reverse gear train, is established.
Also, a neutral position is a state where the dog clutches 75, 76 are not engaged with any one of the driven gears 71, 73, 74, or 72.

A driving shaft 80 parallel to the output shaft 53 is rotatably mounted to the transmission case 50 by ball bearings 81, 82, while a driving gear 77 provided for the output shaft 53 is meshed with a driven gear 83 provided for the driving shaft 80, so that the driving shaft 80 is rotated at a gear ratio of the established gear train and in a rotation direction thereof, transmitting the rotation driving force through propeller shafts to front and rear wheels 2, 3.

Also, the driving force of the driving shaft 80 is transmitted to the front wheels 2 through the propeller shaft and a differential gear 84, while it is transmitted to the rear wheels 3 through the propeller shaft 86 held in a swing arm 85. Also, the driving shaft 80 is coupled to the propeller shaft by means of a constant velocity joint.

A shaft 90 is provided parallel to an output shaft 53 in the transmission case 50, and is slidably provided with shift forks 91, 92.
In the drawings, the dog clutches 75, 76 are separated from the shift forks 91, 92 in order to avoid intersecting of lines, but in reality the dog clutches 75 and 76 are engaged with the shift forks 91 and 92, respectively.

The base ends of the shift forks 91, 92 are engaged with cam grooves 94, 95 of a shift drum 93 disposed parallel to the shaft 90 by transmitting the rotation of a shift spindle 96 through a fan-shaped gear 97 and a driven gear 98 to the shift drum 93.

The shift spindle 96 is rotated by transmitting the rotation of an electric motor, not shown, through a speed reducing gear train. Also, a detector 99 for detecting a shift position is attached to the rear end of the shift drum 93 so as to determine the shift position from the rotation speed thereof.

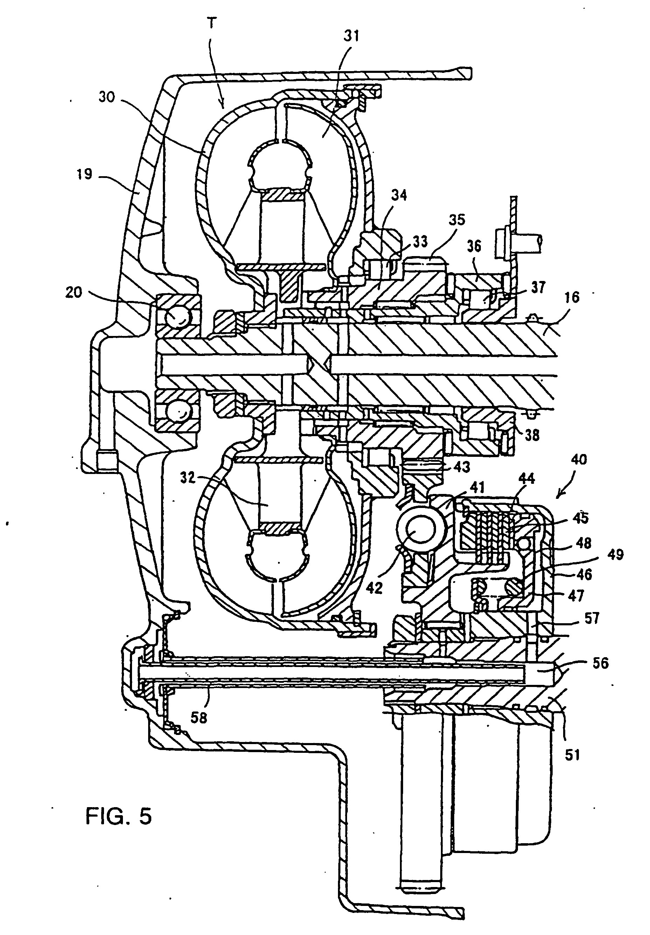

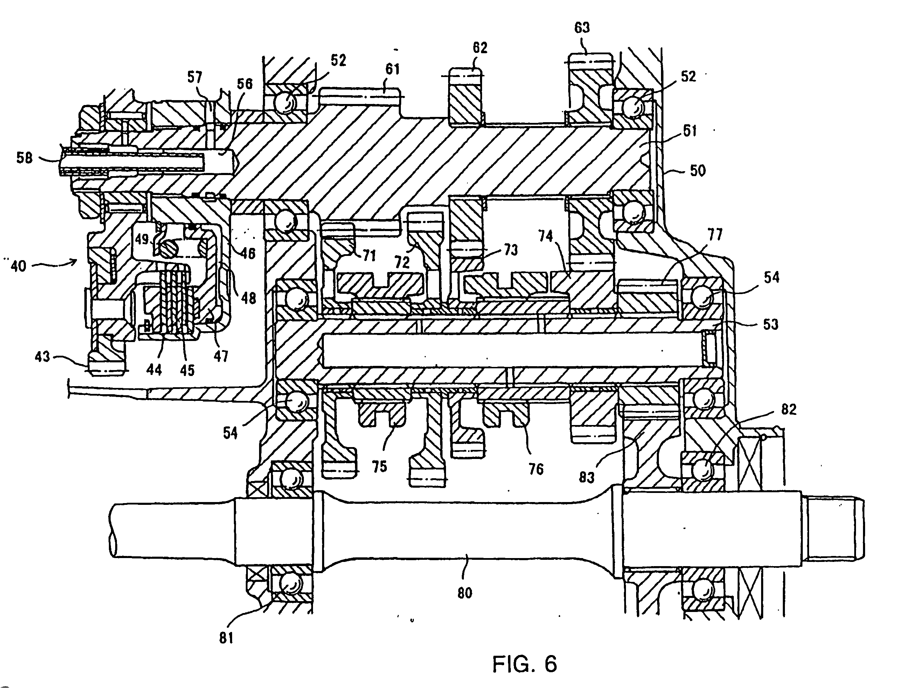

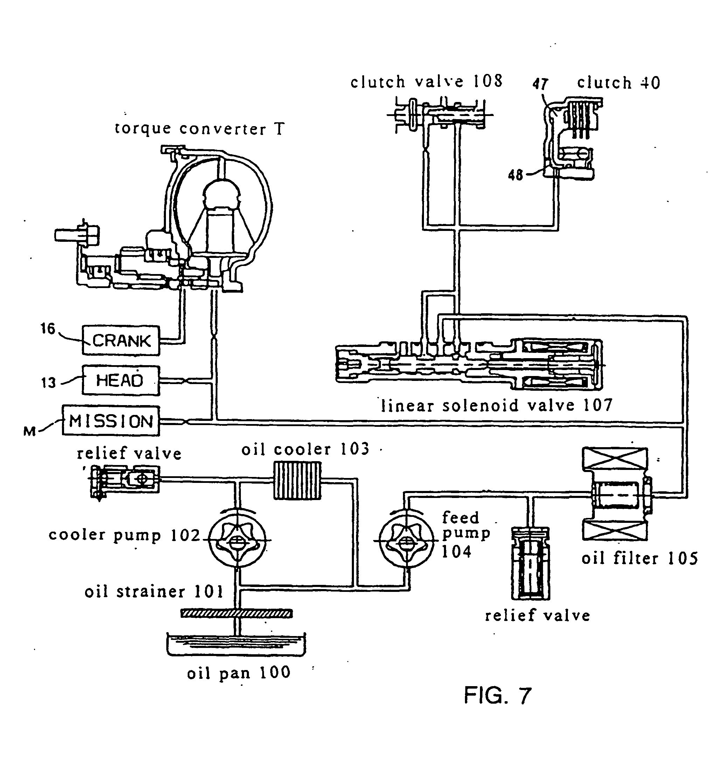

Fig. 7 is an oil pressure control circuit diagram for the power unit P shown in Figs. 4, 5, 6. In this embodiment, the oil is used as hydraulic oil for the torque converter T and the clutch 40, as well as lubricating oil for being fed to the crank shaft 16, the cylinder head 13, and the transmission mechanism M.

The oil, sucked from an oil pan 100 through an oil strainer 101 by a cooler pump 102, is cooled by an oil cooler 103, and is returned into the oil pan 100.

The oil in the oil pan 100 is sucked through the oil strainer 101 by a feed pump 104, and is fed therefrom through an oil filter 105 to a linear solenoid valve 107. By operating the linear solenoid valve 107, the oil is fed into the oil chamber 48 of the clutch 40, and moves the hydraulic piston 47 to the right in Fig. 7. The hydraulic piston 47 presses the first and second clutch plates 44, 45 against each other, thereby turning on the clutch 40.

As described above, the driving force is transmitted from the torque converter T to the transmission mechanism M by turning on the clutch 40.
The turning off of the linear solenoid valve 107 reduces the oil pressure for feeding to the clutch 40, and therefore brings the clutch 40 into an off state. A clutch valve 108 is then operated so as to rapidly deliver the feed oil to the clutch 40 and thereby improve the operation response thereof.

Also, a portion of the oil through the oil filter 105 is fed as lubricating oil to the cylinder head 13 and the transmission mechanism M, while the remaining oil is fed as hydraulic oil to the torque converter T, and is further fed from there to the crank shaft 16 as lubricating oil.
Also, the oil used as lubricating or hydraulic oil is recycled into the oil pan 100.

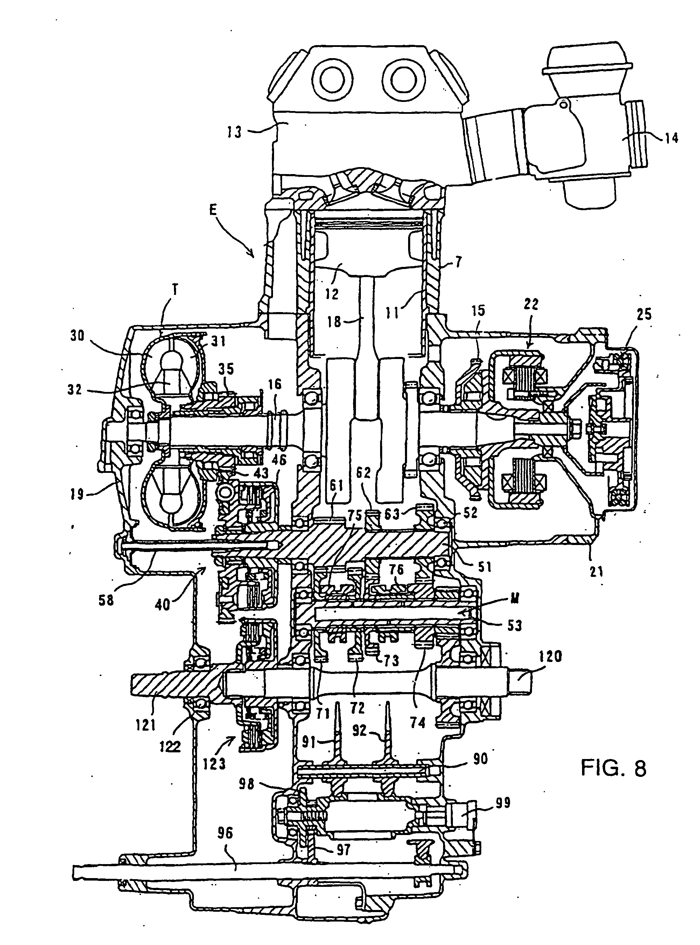

Fig. 8 is a similar cross-sectional view to Fig. 4, illustrating another embodiment of the power unit P. In this embodiment, a clutch 123 performing on/off operation in power transmission is interposed between a driving shaft 120 and a propeller shaft 121 for front wheels being rotatably mounted via a ball bearing 122 on the front cover 19 extending to the front of the transmission case 50, instead of coupling these shafts together by means of the constant velocity joint as in the aforementioned embodiment.

Thus, in the on state of the clutch 123, the power is transmitted through the driving shaft 120 to the propeller shaft 121 for front wheels so that both the front and rear wheels are converted into driving wheels, while in the off state of the clutch 123, the power transmission to the propeller shaft 121 for front wheels is interrupted so that the front wheels function only as steering wheels.

While a saddle riding type vehicle for traveling on uneven ground has been illustrated in the accompanying drawings, application of the invention is not limited to a saddle riding type vehicle.
Also, while the rear wheels are upwardly and downwardly swingable by the swing arm in the accompanying drawings, the invention may be a four-wheel independent suspension type.
Moreover, while the crank shaft is arranged in the longitudinal direction of the body in the accompanying drawings, it may be arranged in the transverse direction of the body.

The invention suppresses slippage during traveling on uneven ground such as a muddy, marshy, sandy, snowy, or graveled road surface.

To achieve this in a power transmission path of a vehicle for traveling on uneven ground, there is provided a torque converter so that transmission torque to a propeller shaft varies smoothly. Accordingly, it is difficult for the torque transmitted to the propeller shaft to exceed a tire slip limit.

### SYMBOLS:

1. body frame, 2. front wheel, 3. rear wheel, 4. handle, 5. fuel tank, 6. seat, 7. cylinder block, 8. exhaust pipe, 9. muffler, 10. crank case, 11. sleeve, 12, piston, 13, cylinder head, 14. carburetor, 15. start gear, 16. crank shaft, 17. ball bearing, 18. connecting rod, 19. front cover, 20. ball bearing, 21. rear cover, 22. electric generator, 23. rotor, 24. stator, 25. recoil stator, 30. pump impeller, 31. turbine runner, 32. stator impeller, 33. one-way clutch, 34. turbine shaft, 35. primary gear, 40. clutch, 41. clutch center, 42. dampener spring, 43. driven gear, 44. first clutch plate, 45. second clutch plate, 46. clutch drum, 47. piston, 48. oil chamber, 49. spring, 50. transmission case, 51. input shaft, 52, 54. ball bearings, 53. output shaft, 56, 57. oil path, 58. pipe, 61, 62, 63. driving gears, 71, 72, 73, 74. driven gears, 75, 76. dog clutches, 80. driving shaft, 81, 82. ball bearings, 83. driven gear, 84. differential gear, 85. swing arm, 90. shaft, 91, 92. shift forks, 93. shift drum, 94, 95. cam grooves, 96. shift spindle, 97. fan-shaped gear, 98. driven gear, 99. detector, 100. oil pan, 101. oil strainer, 102. cooler pump, 103. oil cooler, 104. feed pump, 105. oil filter, 106. accumulator, 107. linear solenoid valve, 108. clutch valve, 109. shift valve, 110. shift solenoid valve, 120. driving shaft, 121. propeller shaft for front wheel, 122. ball bearing, 123. clutch, E. engine, M. transmission mechanism, P. power unit, T. torque converter.

## Claims

1. A vehicle for traveling on uneven ground, fitted with low-pressure balloon tires (2, 3), wherein a clutch (40) is provided in a power transmission path extending from an engine crank shaft (16) to a multistage transmission input shaft (51),
**characterized by** a torque converter (T) permitting a torque amplification disposed in the power transmitting path in series between the engine crank shaft (16) and the clutch (40), whereby said clutch is arranged between the torque converter (T) and the crank case (10) so that part of it overlaps the torque converter (T) when viewing in the longitudinal direction of the vehicle body.

2. Vehicle according to claim 1,
wherein the ground contact pressure of the low-pressure balloon tire (2, 3) is no more than 0,50 kg/cm².

## Patentansprüche

1. Fahrzeug zum Fahren auf unebenem Boden, welches mit Niederdruckballonreifen (2, 3) ausgestattet ist, wobei eine Kupplung (40) in einem Kraftübertragungsweg vorgesehen ist, der sich von einer Motorkurbelwelle (16) zu einer Mehrstufengetriebe-Eingangswelle (51) erstreckt, **gekennzeichnet durch** einen Drehmomentwandler (T), der eine Drehmomentverstärkung gestattet und in dem Kraftübertragungsweg in Serie zwischen der Motorkurbelwelle (16) und der Kupplung (40) angeordnet ist, wodurch die Kupplung zwischen dem Drehmomentwandler und dem Kurbelgehäuse (10) angeordnet ist, so dass ein Teil von ihr den Drehmomentwandler (T) überlappt, wenn man in der Längsrichtung des Fahrzeugkörpers blickt.

2. Fahrzeug nach Anspruch 1, worin der Bodenkontaktdruck des Niederdruckballonreifens (2, 3) nicht mehr ist als 0,50 kg/cm².

## Revendications

1. Véhicule tout terrain, sur lequel sont montés des pneumatiques ballon à basse pression (2, 3), dans lequel un embrayage (40) est aménagé dans une voix de transmission de puissance qui s'étend entre un vilebrequin de moteur (16) et un arbre d'entrée d'une transmission à étages multiples (51),
**caractérisé par** un convertisseur de couple (T) permettant une amplification de couple disposé en série dans la voix de transmission de puissance entre le vilebrequin de moteur (16) et l'embrayage (40), grâce auquel ledit embrayage est aménagé entre le convertisseur de couple (T) et le carter moteur (10) de telle sorte qu'une partie de celui-ci recouvre le convertisseur de couple (T) lorsqu'il est vu dans la direction longitudinale du corps de véhicule.

2. Véhicule selon la revendication 1, dans lequel la pression de contact avec le sol des pneumatiques ballon à basse pression (2, 3) n'est pas supérieure à 0,50 kg / cm².
